Europäisches Patentamt

European Patent Office

Office européen des brevets

(11) Veröffentlichungsnummer: **0 237 824**
B1

# EUROPÄISCHE PATENTSCHRIFT

(45) Veröffentlichungstag der Patentschrift:
27.12.89

(21) Anmeldenummer: 87102335.4

(22) Anmeldetag: 19.02.87

(51) Int. Cl.⁴: **F01N 3/02**, B01D 46/24

(54) Verfahren und Vorrichtung zur Regeneration von Partikelfiltersystemen.

(30) Priorität: 15.03.86 DE 3608801

(43) Veröffentlichungstag der Anmeldung:
23.09.87 Patentblatt 87/39

(45) Bekanntmachung des Hinweises auf die Patenterteilung:
27.12.89 Patentblatt 89/52

(84) Benannte Vertragsstaaten:
DE FR GB IT SE

(56) Entgegenhaltungen:
PATENT ABSTRACTS OF JAPAN, Band 9,
Nr. 290 (M-430)[2013], 16. November 1985; &
JP-A-60 128 920 (MAZDA K.K.) 10-07-1985
PATENT ABSTRACTS OF JAPAN, Band 9,
Nr. 3 (M-349)[1726], 9. Januar 1985; &
JP-A-59 153 914 (NISSAN JIDOSHA K.K.) 01-09-1984

(73) Patentinhaber: FEV Motorentechnik GmbH & Co. KG,
Jülicher Strasse 342-352, D-5100 Aachen(DE)

(72) Erfinder: Pischinger, Franz, Prof. Dr., Im Erkfeld 4,
D-5100 Aachen(DE)
Erfinder: Lepperhoff, Gerhard, Dr., Eschenweg 72,
D-5180 Eschweiler(DE)

(74) Vertreter: Fischer, Friedrich B., Dr.-Ing., Saarstrasse 71,
D-5000 Köln 50 (Rodenkirchen)(DE)

**Beschreibung**

Die Erfindung bezieht sich auf ein Verfahren und eine Vorrichtung zur Regeneration von Partikelfiltersystemen für die Abgase von Brennkraftmaschinen, bei dem in Abhängigkeit von einer Kenngröße der Menge des abgelagerten Rußes dem Filtersystem Sekundärenergie zur Einleitung der Regeneration zugeführt wird.

Zur Verminderung der Partikelemission durch Abgase von Brennkraftmaschinen werden Partikelfiltersysteme zur Abgasnachbehandlung eingesetzt. Hierbei haben vor allem wabenförmige, keramische Filter einen hohen Rückhalteeffekt im Hinblick auf den Ruß im Abgas von Dieselmotoren. Bei diesen Filtern strömt das Abgas in die Eintrittskanäle und von dort durch die porösen Wände in die Austrittskanäle. Die Kanäle sind parallel angeordnet und im Wechsel gegenseitig verschlossen.

Infolge der Durchströmung durch die poröse Wand lagert sich auf der Oberfläche der Eintrittskanäle der Ruß ab. Dies führt zu einer Erhöhung des Strömungswiderstandes und damit zu einer Erhöhung des Abgasgegendruckes. Eine Abgasgegendruckerhöhung bewirkt aber eine Erhöhung des Kraftstoffverbrauches und kann bei Blockierung des Filtersystems bis zum Stillstand des Motors führen. Es ist daher erforderlich, den in den Filtern gesammelten Ruß kontinuierlich oder intermittierend zu verbrennen. Zur thermischen Rußoxidation sind Temperaturen von 550–650 Grad C erforderlich. Dabei können diese Temperaturen durch Aufheizung des gesamten Abgasstromes erreicht werden. Andererseits besteht auch die Möglichkeit, bei niedriger Wärmeableitung den Ruß am Kanalanfang durch eine Initialzündung zu entflammen und infolge der exothermen Rußverbrennung ein selbständiges Weiterbrennen in der Rußschicht zu erreichen.

Eine sich selbst tragende Regeneration der Filter oder von Filterteilen sowie auch die Vollständigkeit des Rußabbrandes in den Kanälen hängt neben der Temperatur vor allem auch von der in den Kanälen angelagerten Rußmenge ab. Einerseits ist es erforderlich, daß eine genügend hohe Rußschicht im Kanal vorhanden ist, um infolge der bei der Verbrennung freigesetzten Wärme (minus der durch das Abgas und das Filtermaterial abgeführten Wärme) eine positive Wärmebilanz zur Fortpflanzung der Verbrennung zu erreichen. Andererseits darf aber die Rußschichtdicke nicht zu hoch sein, da sonst die Wärmeentwicklung bei der Rußverbrennung so hoch wird, daß eine Zerstörung des Filters durch Anschmelzen des Filtermaterials und/oder durch thermisches Cracken infolge zu hoher Temperaturgradienten über dem Filtermaterial erfolgt.

Eine verhältnismäßig grobe Möglichkeit einer Steuerung des Regenerationsvorganges in Partikelfiltersystemen stellt die Messung des Druckes vor dem Filter dar, wie es in US-PS 4 436 535 beschrieben ist. Der so gemessene Druck ist aber abhängig von der Strömungsgeschwindigkeit des Abgases in den Filterkanälen. Die Strömungsgeschwindigkeit hängt ab von der Abgastemperatur und dem Abgasvolumenstrom, also von Last (Drehmoment) und Drehzahl des Motors. Weiterhin wird der Gegendruck von der unterschiedlichen Ablagerung des Rußes sowie der Rußzusammensetzung und damit von der Packungsdichte des Rußes beeinflußt.

Durch PATENT ABSTRACTS OF JAPAN, Band 9, Nr. 290 (M-430), 16. November 1985, und JP-A 60 128 920 ist ein Filter für die Abgase von Dieselmotoren bekannt geworden, bei dem eine Verstopfung des Filters durch Änderung des elektrischen Widerstandes zwischen zwei Elektroden ermittelt und dadurch festgestellt wird, daß die Menge der gesammelten Partikeln einen bestimmten Wert erreicht. Wenn der Zustand der Verstopfung festgestellt wird, wird eine elektrische Heizeinrichtung mit Strom versorgt, um den Regenerationsvorgang durch Verbrennung der Partikeln zu bewirken.

Dieser Verfahrensweise liegt die an sich zutreffende Erkenntnis zugrunde, daß die Filterregeneration in Abhängigkeit von einer Messung der Menge des abgelagerten Rußes vorteilhaft ist, weil andere Kriterien, beispielsweise der Gasdruck vor dem Filter, von Betriebsparametern der Brennkraftmaschine, insbesondere von Drehmoment und Drehzahl, abhängig sind. Es hat sich jedoch gezeigt, daß die Messung der Menge des abgelagerten Rußes durch Messung des elektrischen Widerstandes zwischen zwei Elektroden hinsichtlich der erreichbaren Genauigkeit nicht in allen Fällen befriedigt, und die Ursache dürfte vor allem darin liegen, daß unterschiedliche Kraftstoffzusammensetzungen, unterschiedliche Ölzusammensetzungen, aber auch unterschiedliche Betriebsarten der Brennkraftmaschine den ohmschen Widerstand der Rußschicht beeinflussen und die Genauigkeit der Messung beeinträchtigen. So können z.B. bei kaltem Filter im Gegensatz zum warmen Filter beträchtliche Wassermengen im Ruß gespeichert werden.

Der Erfindung liegt daher die Aufgabe zugrunde, die Filterregeneration so zu steuern, daß einerseits ein wirtschaftlicher Kraftstoffverbrauch erreicht und andererseits eine Beschädigung des Filters durch Überhitzungen infolge von Fehlsteuerungen des Regenerationsvorganges vermieden wird, und zwar durch eine Verbesserung der Messung der in dem Filter abgelagerten Rußmenge.

Gemäß der Erfindung wird dies bei einem Regenerationsverfahren der eingangs bezeichneten Art dadurch erreicht, daß die als thermischer Widerstand bezeichnete Kenngröße dadurch ermittelt wird, daß dem Filter an einer ersten zuströmseitigen Stelle Wärmeenergie zugeführt wird und an einer zweiten, von der ersten Stelle durch eine Schicht des abgelagerten Rußes getrennten Stelle die Änderung der Temperatur über der Zeit festgestellt wird und die Regeneration in Abhängigkeit von der zeitlichen Änderung erfolgt.

Gemäß einer bevorzugten Ausführungsform ist vorgesehen, daß die Beendigung der Regeneration in Abhängigkeit von der durch die zeitliche Änderung der gemessenen Temperatur repräsentierten Menge der in vorgegebenen Bereichen des Filtersystems abgelagerten Partikeln gesteuert wird.

Gemäß einer weiteren bevorzugten Ausführungsform ist vorgesehen, daß eine erhöhte Zufuhr von Energie in Abhängigkeit von der durch die zeitliche Änderung der Temperatur repräsentierten Menge der in vorgegebenen Bereichen des Filtersystems abgelagerten Partikeln vor vollständiger Regeneration abgebrochen wird.

Auch kann es vorteilhaft sein, daß die Intensität der Zufuhr von Energie über der Zeit in Abhängigkeit von der durch die zeitliche Änderung der Temperatur repräsentierten Menge der in vorgegebenen Bereichen des Filtersystems abgelagerten Partikeln gesteuert wird.

Eine Vorrichtung zur Ausführung des Verfahrens enthält eine Einrichtung zur kontrollierten Erzeugung thermischer Energie an der Zuströmseite eines vorgegebenen Bereiches des Filtersystems und eine Temperaturmesseinrichtung an der Abströmseite des Bereiches, die mit einer Steuereinrichtung zur Steuerung der erhöhten Zufuhr thermischer Energie zusammenwirkt.

Die Einrichtung zur kontrollierten Erzeugung thermischer Energie kann dabei ein elektrisches Widerstandsheizelement sein, und die Temperaturmesseinrichtung enthält zweckmäßigerweise eine Thermoelement-Anordnung.

Vorteilhaft ist bei dieser Art der direkten Regenerationssteuerung und Einleitung der Regeneration, daß ein verstärkter Rußaufbau (z.B. durch defekte Einspritzsysteme) erkannt werden kann. Einerseits kann dieses Signal zur Warnung der Bedienungsperson benutzt werden und andererseits kann dieses Signal verwendet werden, um eine erhöhte Regenerationsfrequenz einzuregeln. Die direkte Messung der Rußschichtdicke steht in unmittelbarem Zusammenhang mit der Rußbeladung des gesamten Filters, und sie ist nicht abhängig vom Strömungszustand des Abgases, wie es bei der Bestimmung des Abgasgegendruckes der Fall wäre.

Ein weiterer Vorteil der Erfindung ist, daß, die Messung der Schichtdicke in definierten Bereichen eines einzelnen Filters durchgeführt und zur Steuerung der Regeneration dieser definierten Filterbereiche benutzt werden kann. Bei Überschreitung einer als Schichtdickengrenze vorgegebenen Rußschichtdicke kann ein Signal an eine elektrische Steuereinheit gegeben werden, die beispielsweise mäanderförmig in die Eintrittskanäle des Filters gelegte Widerstandsheizelemente einschaltet. Diese Heizelemente zünden den angelagerten Ruß an, und bei geringer Wärmeabfuhr setzt sich die Rußverbrennung selbständig in den Kanälen fort. Nachdem die Rußverbrennung eine bestimmte Strecke im Kanal durchlaufen hat, die kleiner als die Kanallänge ist, geben die Elektroden das Signal, daß ein entsprechender Teil der Rußschicht abgebrannt ist; hierauf wird die elektrische Beheizung abgeschaltet, und die Rußverbrennung setzt sich selbständig im Kanal weiter fort. Hierdurch ist es möglich, bei Filtersystemen mit einer Abgaszuströmung in verschiedenen Filterbereichen bei Bedarf Regenerationen einzuleiten, ohne eine Abgasmassenstromsteuerung vornehmen zu müssen bzw. hierdurch besteht Unabhängigkeit von der Rußzusammensetzung.

Diese Steuerung kann anstelle der elektrischen Heizungsregeneration auch mit einem Brenner, der intermittierend die Rußschicht ansteckt, gekoppelt werden.

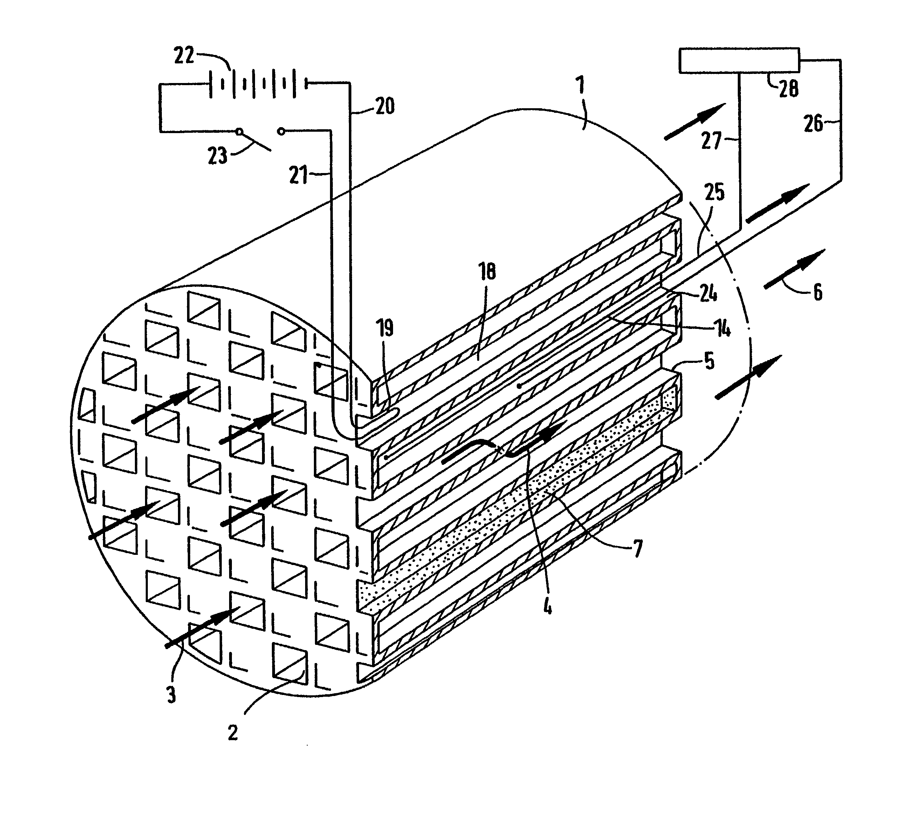

Ein Ausführungsbeispiel der Erfindung wird nachfolgend an Hand der Zeichnung näher beschrieben.

Ein keramisches Filter 1 enthält Eintrittskanäle 2, die auf der durch Pfeile 3 bezeichneten Zuströmseite offen sind. Wie Pfeil 4 zeigt, strömt das zu reinigende Abgas durch die porösen Wandungen des Filters 1 in Austrittskanäle 5 und wird auf der durch Pfeile 6 bezeichneten Abströmseite weitergeleitet. Die abgeschiedenen festen Partikeln, überwiegend Ruß, sammeln sich als Schicht 7 an der Wandung der Eintrittskanäle 2.

Um eine Rußschichtdickenmessung bzw. Rußschichtmassenmessung mit Hilfe der Abgastemperaturbestimmung zu ermöglichen, befindet sich im Filter 1 im Eintrittskanal 18 ein elektrisch beheiztes Widerstandselement 19. Dieses wird über Leitungen 20, 21 von einer Spannungsquelle 22 versorgt. Die Einschaltung kann intermittierend oder kontinuierlich durch einen Schalter 23 erfolgen. In einem an Eintrittskanal 18 angrenzenden Austrittskanal 24 befindet sich ein Thermoelement 25 in der Höhe des Heizelementes 19. Das Thermoelement 25 ist über Leitungen 26, 27 mit einer elektronischen Auswerte- und Steuereinheit 28 verbunden. In Abhängigkeit von der Abgastemperatur und dem Abgasvolumenstrom heizt der Widerstandsdraht 19 das Abgas im Eintrittskanal 18 auf. Die Abgastemperatur des Abgases, das radial in der Höhe des Heizdrahtes 19 zum Austrittskanal 24 und damit zum Thermoelement 25 strömt, wird von diesem Thermoelement 25 erfaßt.

Mit zunehmender Rußschichtdicke wird ein zunehmender Teil der Wärme des Heizelementes 19 von der umgebenden Rußschicht adsorbiert, so daß der radiale Abgasstrom in Richtung auf das Thermoelement 25 nicht so stark aufgeheizt werden kann, wie bei einer Strömung ohne Rußschicht. Auch wird der axiale Abgasstrom nicht mehr aufgeheizt werden, so daß das Thermoelement 25, das sich im gleichen Kanal 24 befindet, kaum noch eine Temperaturänderung anzeigen wird. Es kann daher vereinfacht auch von einem "thermischen Widerstand " gesprochen werden. Die Thermospannungen werden in der Auswerte- und Steuereinheit 28 mit der Temperatur des Abgases vor dem Filter verglichen und ausgewertet. Aus den Temperaturdifferenzen bei der partiellen Heizung des Eintrittskanals 18 kann dann die Rußschichtdicke bestimmt werden. Nach Vorgabe eines Sollwertes in der Auswerte- und Steuereinheit wird die Regeneration des Filters in der beschriebenen Weise ausgelöst.

Die Erfindung ist nicht auf die dargestellten und beschriebenen Ausführungsbeispiele beschränkt. So ist es insbesondere auch möglich, die Erhöhung der Zufuhr von thermischer Energie zum Zweck der Entflammung des Rußes nicht elektrisch, sondern chemisch vorzunehmen, insbesondere mit Hilfe eines Brenners, dem in geeigneter Weise Brennstoff mit Sauerstoff zugeführt wird.

Vorteilhaft ist es auch, die Beendigung der erhöhten Zufuhr thermischer Energie in Abhängigkeit von der Menge der in vorgegebenen Bereichen des Filtersystems abgelagerten Partikeln zu steuern, wobei auch die erhöhte Zufuhr thermischer Energie vor vollständiger Regeneration abgebrochen werden kann und/oder über der Zeit in Abhängigkeit von der jeweiligen Messung der Menge der abgelagerten Partikeln gesteuert wird.

**Patentansprüche**

1. Verfahren zur Regeneration von Partikelfiltersystemen für die Abgase von Brennkraftmaschinen, bei dem in Abhängigkeit von einer Kenngröße der Menge des abgelagerten Rußes dem Filtersystem Sekundärenergie zur Einleitung der Regeneration zugeführt wird, dadurch gekennzeichnet, daß die als thermischer Widerstand bezeichnete Kenngröße dadurch ermittelt wird, daß dem Filter an einer ersten zuströmseitigen Stelle Wärmeenergie zugeführt wird und an einer zweiten, von der ersten Stelle durch eine Schicht des abgelagerten Rußes getrennten Stelle die Änderung der Temperatur über der Zeit festgestellt wird und die Regeneration in Abhängigkeit von der zeitlichen Änderung erfolgt.

2. Verfahren nach Anspruch 1, dadurch gekennzeichnet, daß die Beendigung der Regeneration in Abhängigkeit von der durch die zeitliche Änderung der gemessenen Temperatur repräsentierten Menge der in vorgegebenen Bereichen des Filtersystems abgelagerten Partikeln gesteuert wird.

3. Verfahren nach Anspruch 1 oder 2, dadurch gekennzeichnet, daß eine erhöhte Zufuhr von Energie in Abhängigkeit von der durch die zeitliche Änderung der Temperatur repräsentierten Menge der in vorgegebenden Bereichen des Filtersystems abgelagerten Partikeln vor vollständiger Regeneration abgebrochen wird.

4. Verfahren nach einem der Ansprüche 1–3, dadurch gekennzeichnet, daß die Intensität der Zufuhr von Energie über die Zeit in Abhängigkeit von der durch die zeitliche Änderung der Temperatur repräsentierten Menge der in vorgegebenen Bereichen des Filtersystems abgelagerten Partikeln gesteuert wird.

5. Vorrichtung zur Ausführung des Verfahrens nach den Ansprüchen 1–4, mit einer Einrichtung zur Regeneration von Partikelfiltersystemen für die Abgase von Brennkraftmaschinen, mit Mitteln die in Abhängigkeit von einer Kenngröße der Menge des abgelagerten Rußes dem Filtersystem Sekundärenergie zur Einleitung der Regeneration zuführen gekennzeichnet durch eine Einrichtung (19) zur kontrollierten Erzeugung thermischer Energie an einer an der Zuströmseite eines vorgegebenen Bereiches (Eintrittskanal 18) des Filtersystems (1) angeordneten ersten Stelle und eine Temperaturmesseinrichtung (25, 26, 27) an einer zweiten, von der ersten Stelle durch eine Schicht des abgelagerten Rußes, an der Abströmseite des Bereiches angeordneten Stelle, die mit einer Steuereinheit (28) zur Steuerung, Feststellung der Änderung der Temperatur über der Zeit und zu der erhöhten Zufuhr von Sekundärenergie Energie in Abhängigkeit von der zeitlichen Änderung zusammenwirkt.

6. Vorrichtung nach Anspruch 5, dadurch gekennzeichnet, daß die Einrichtung zur kontrollierten Erzeugung thermischer Energie ein elektrisches Widerstandsheizelement (19) ist.

7. Vorrichtung nach Anspruch 5, dadurch gekennzeichnet, daß die Temperaturmesseinrichtung eine Thermoelement-Anordnung (25, 26, 27) ist.

**Claims**

1. A method of regenerating particle filter systems for the exhaust gases of internal combustion engines, where secondary energy for initiating the regeneration is supplied to the filter system in dependence on a parameter of the quantity of deposited carbon, characterised in that the parameter, called the thermal resistance, is determined by supplying heat energy to the filter at a first place on the inflow side and determining the change in temperature per unit time at a second place separated from the first place by a layer of deposited carbon, and regeneration is brought about in dependence on the change per unit time.

2. A method according to claim 1, characterised in that the end of regeneration is controlled in dependence on the quantity, represented by the change in measured temperature per unit time, of particles deposited in predetermined regions of the filter system.

3. A method according to claim 1 or 2, characterised by shut-off, before complete regeneration, of an increased supply of energy in dependence on the quantity represented by the change in temperature per unit time, of particles deposited in predetermined regions of the filter system.

4. A method according to any of claims 1 to 3, characterised in that the intensity of energy supplied per unit time is controlled in dependence on the amount, represented by the change in temperature per unit time, of particles deposited in predetermined regions of the filter system.

5. Means for working the method according to claim 1–4, comprising a device for regenerating particle filter systems for waste gases from internal combustion engines, with means which supply the filter systems with secondary energy for initiation of regeneration in dependence on a parameter of the amount of deposited carbon, characterised by a device (19) for controlled production of thermal energy at a first place disposed on the inflow side of a predetermined region [intake channel (18)] of the filter system (1) and a temperature-measuring device (25, 26, 27) at a second place separated from the first place by a layer of deposited carbon, at the outlet side of the aforementioned region and cooperating with a control unit (28) for detecting the change in temperature per unit time and for controlling the increased supply of secondary energy in dependence on the change per unit time.

6. Means according to claim 5, characterised in that the device for controlled production of thermal energy is an electric resistance heating element (19).

7. Means according to claim 5, characterised in that the temperature-measuring device is a thermoelement system (25, 26, 27).

## Revendications

1. Procédé pour la régénération de systèmes pour le filtrage de particules dans les gaz d'échappement de moteurs à combustion interne, dans lequel, en fonction d'une grandeur caractéristique de la quantité de suie déposée, de l'énergie secondaire est amenée au système de filtrage pour amorcer la regénération, caractérisé par le fait que la grandeur caractéristique désignée sous le nom de résistance thermique est obtenue par le fait que de l'énergie thermique est amenée au filtre en un premier endroit situé du côté de l'entrée, que l'on détermine la variation de la température en fonction du temps en un second endroit séparé du premier endroit par une couche de la suie déposée, et que la régénération a lieu en fonction de cette variation dans le temps.

2. Procédé selon la revendication 1, caractérisé par le fait que la fin de la régénération est commandée en fonction de la quantité des particules déposées dans des zones prédéterminées du système de filtrage, laquelle est traduite par la variation dans le temps de la température mesurée.

3. Procédé selon la revendication 1 ou 2, caractérisé par le fait qu'une amenée d'énergie plus importante est interrompue avant la régénération complète en fonction de la quantité des particules déposées dans des zones prédéterminées du système de filtrage, laquelle est traduite par la variation dans le temps de la température mesurée.

4. Procédé selon l'une des revendications 1 à 3, caractérisé par le fait que l'intensité de l'amenée d'énergie dans le temps est commandée en fonction de la quantité des particules déposées dans des zones prédéterminées du système de filtrage, laquelle est traduite par la varation dans le temps de la température mesurée.

5. Dispositif pour la mise en œuvre du procédé selon les revendications 1 à 4, comprenant un dispositif pour la régénération de systèmes pour le filtrage de particules pour les gaz d'échappement de moteurs à combustion interne, lequel comprend des moyens qui, en fonction d'une valeur caractéristique de la quantité de suie déposée, amènent au système de filtrage de l'énergie secondaire pour amorcer la régénéreration, caractérisé par un dispositif (19) pour la génération contrôlée d'énergie thermique en un premier endroit disposé du côté de l'entrée d'une zone prédéterminée (canal d'entrée 18) du système de filtrage (1), et un dispositif de mesure de la température (25, 26, 27) en un second endroit qui est séparé du premier endroit par une couche de la suie déposée et qui est disposé du côté de l'échappement de la zone, dispositif qui coopère avec une unité de commande (28) pour déterminer la variation de la température dans le temps et commander l'amenée plus importante d'énergie secondaire en fonction de la variation dans le temps.

6. Dispositif selon la revendication 5, caractérisé par le fait que le dispositif pour la génération contrôlée d'énergie thermique est un élément électrique à résistance chauffante (19).

7. Dispositif selon la revendication 5, caractérisé par le fait que le dispositif de mesure de la température est un dispositif à élément thermo-électrique (25, 26, 27).

EP 0 237 824 B1